# FASCICULE DE BREVET EUROPEEN

(11) **EP 2 678 749 B1**
(45) Date de publication et mention de la délivrance du brevet: **08.04.2015**
(21) Numéro de dépôt: 12707930.9
(22) Date de dépôt: 20.02.2012
(51) Int. Cl.: G05D 11/00

(54) **DISPOSITIF DESTINÉ À L'INJECTION D'UN ADDITIF DANS UNE CANALISATION**
VORRICHTUNG ZUR EINSPRITZUNG EINES ADDITIVS IN EIN ROHR
DEVICE FOR INJECTING AN ADDITIVE INTO A PIPE

(30) Priorité: 25.02.2011 FR 1151582
(43) Date de publication de la demande: 01.01.2014
(73) Titulaire: Fire Innov, 1331 Luxembourg (LU)
(72) Inventeur: ISSARTEL, Eric, F-86210 Vouneuil sur Vienne (FR); QUILLET, Gérard, F-37800 St Maure de Touraine (FR)
(74) Mandataire: Nony
(86) Numéro de dépôt international: PCT/IB2012/050768
(87) Numéro de publication internationale: WO 2012/114259

(56) Documents cités:
- WO-A1-00/55702
- DE-U1- 9 404 549
- FR-A1- 2 918 773

## Description

### Domaine technique

La présente invention concerne un procédé et un dispositif destinés à l'injection d'un additif dans une canalisation traversée par un liquide dont le débit est variable, notamment pour réguler la concentration d'un additif dans un courant d'eau alimentant un réseau d'asperseurs.

### Etat de la technique

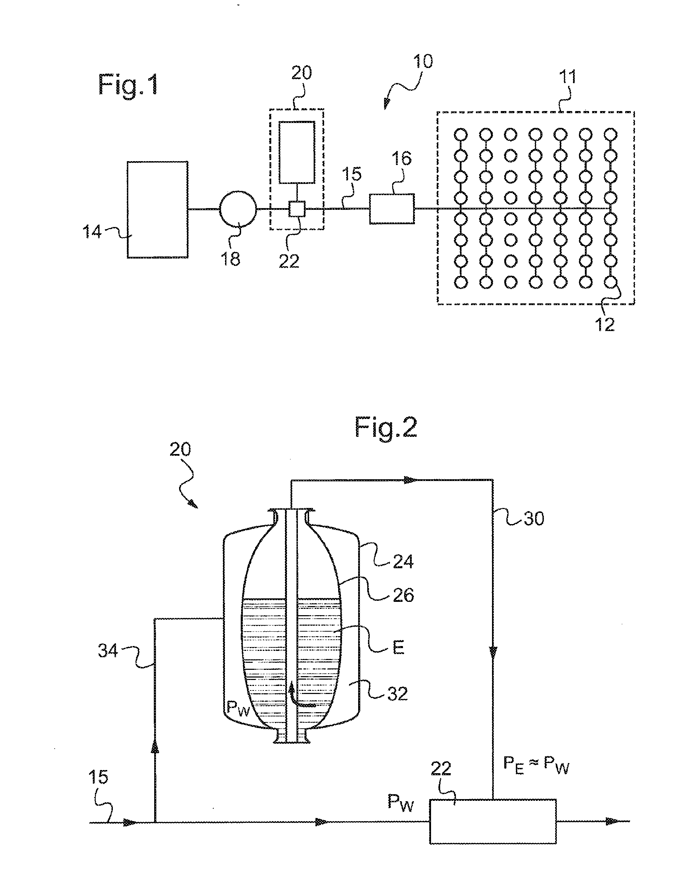

Les réseaux d'asperseurs, ou « réseaux de sprinklers », sont classiquement utilisés dans le cadre de la protection incendie des bâtiments. Un tel réseau 10, comme représenté sur la figure 1, comporte classiquement un ensemble 11 d'asperseurs 12 en communication de fluide avec une réserve d'eau 14, par l'intermédiaire d'une canalisation 15, dans laquelle sont insérés un poste de contrôle 16 et une pompe d'alimentation 18. Un asperseur 12 est classiquement obturé par un élément fusible, par exemple une ampoule de verre, qui fond lorsque la température ambiante est anormalement élevée, par exemple comprise entre 68 et 500 °C. Le poste de contrôle 16 détecte toute dépressurisation résultant de la rupture d'un ou plusieurs fusibles d'asperseur et, en conséquence, établit la communication avec la réserve d'eau 14 et enclenche la pompe 18.

Il en résulte une pulvérisation d'eau dans la pièce où l'asperseur déclenché est installé.

La canalisation 15 et la réserve d'eau 14 sont adaptées de manière à assurer un approvisionnement en eau de l'ensemble 11 d'asperseurs avec un débit et une pression variable en fonction du nombre d'asperseurs déclenchés, le débit restant généralement sensiblement proportionnel à la racine carrée de la pression.

Par exemple, la pression d'alimentation est classiquement comprise entre 3 et 10 bars et le débit compris entre 400 et 2 400 l/min, selon le nombre d'asperseurs déclenchés, lorsque la canalisation présente un diamètre de 100 mm.

Classiquement toujours, un additif, par exemple un émulseur, est injecté dans l'eau pulvérisée au moyen d'une unité de stockage et de dosage (USD) 20 par l'intermédiaire d'un proportionneur 22, inséré sur la canalisation 15 en amont du poste de contrôle 16. Comme représenté sur la figure 2, l'unité de stockage et de dosage 20 comporte classiquement un réservoir métallique 24 dans lequel est disposée une poche souple 26 contenant un additif E, par exemple un émulseur. La poche souple 26 est en communication de fluide avec le proportionneur 22 par l'intermédiaire d'un conduit d'additif 30. L'espace 32 entre la poche souple 26 et le réservoir 24 est en communication de fluide avec la canalisation 15 par l'intermédiaire d'un conduit de pressurisation 34. L'espace 32 est ainsi rempli d'eau, sensiblement à la pression P_{w} de l'eau dans la canalisation 15 en amont du proportionneur 22. La pression P_{E} dans le conduit d'additif 30 en amont du proportionneur 22 est ainsi sensiblement égale à la pression P_{w}.

Le proportionneur 22, généralement à effet Venturi, permet une injection d'additif E d'autant plus grande que le débit d'eau qui le traverse est élevé. Ainsi, au fur et à mesure que le débit d'eau augmente du fait d'une augmentation du nombre d'asperseurs déclenchés, la quantité d'additif injecté augmente. La concentration d'additif dans l'eau pulvérisée par les asperseurs est donc sensiblement constante.

La poche souple 26 peut cependant se percer, notamment par vieillissement ou frottement sur des bavures de soudure ou sur des évents du réservoir 24, en particulier sous l'effet de coups de bélier. Ce problème est d'autant plus grave qu'une fuite n'est pas facilement détectable et affecte le fonctionnement de l'unité 20.

De plus, la poche 26 doit être reconditionnée après utilisation, ce qui implique l'intervention d'un spécialiste et un maintien hors service de longue durée.

Pour les problèmes susmentionnés, l'inventeur a découvert et mis au point le dispositif objet de la demande de brevet FR 2 918 773.

Avec ce dispositif, particulièrement précis, la poche souple des unités de stockage et de dosage selon la technique antérieure peut être supprimée. La fiabilité est ainsi augmentée et la maintenance simplifiée.

Le dispositif décrit dans FR 2 918 773 est cependant complexe, et relativement onéreux.

Il existe donc un besoin pour un procédé et un dispositif présentant les avantages de ce dispositif, mais qui soit moins coûteux.

Le but de l'invention est de satisfaire ce besoin.

### Résumé de l'invention

Selon l'invention, on atteint ce but au moyen d'un dispositif de stockage et de dosage destiné à l'injection d'un additif dans une canalisation traversée par un liquide dont le débit est variable, comportant :
- un réservoir destiné à contenir dudit additif et à être pressurisé à une pression de pressurisation par un fluide pressurisation, et
- un conduit d'additif connecté d'une part audit réservoir et d'autre part à ladite canalisation,
le dispositif étant caractérisé en ce qu'il comporte :
- un détendeur inséré dans ledit conduit d'additif ;
- un régulateur de pression différentielle conformé pour modifier la pression de consigne dudit détendeur en fonction de la différence Δ entre une pression de référence et une pression de pilotage, la pression de référence étant soit mesurée dans le conduit d'additif en amont du détendeur, soit mesurée dans le conduit d'additif en aval du détendeur et en amont d'un point de connexion du conduit d'additif à ladite canalisation, la pression de pilotage étant mesurée, dans ladite canalisation, en amont dudit point de connexion.

Comme on le verra plus en détail dans la suite de la description, un tel dispositif permet, notamment en combinaison avec un proportionneur classique, une évolution du débit d'injection d'additif sensiblement proportionnelle au débit de liquide dans la canalisation. Avantageusement, ce dispositif est moins coûteux que ceux connus à ce jour. En particulier, le réservoir peut ne pas comporter de poche.

L'invention concerne encore un ensemble comportant un dispositif de stockage et de dosage selon l'invention et ladite canalisation.

De préférence, le dispositif de stockage et de dosage selon l'invention ou ledit ensemble comporte un proportionneur destiné à être inséré ou inséré dans ladite canalisation.

La pression de pilotage peut être mesurée dans la canalisation en amont du proportionneur, de préférence encore à proximité du proportionneur, de préférence à moins d'un mètre, voire moins de 50 cm du proportionneur, en particulier du diaphragme dit « diaphragme eau ».

La pression de référence peut être mesurée immédiatement en amont du détendeur ou dans le réservoir, de préférence dans le fond (partie inférieure) du réservoir. De préférence, elle est mesurée en aval du détendeur et en amont du point de connexion du conduit d'additif sur la canalisation, de préférence en amont du proportionneur, de préférence encore à proximité du proportionneur, de préférence à moins d'un mètre, voire moins de 50 cm du proportionneur, en particulier du diaphragme dit « diaphragme additif ».

Le régulateur peut être configuré de manière à régler la pression de consigne du détendeur de manière à faire tendre la différence Δ vers une valeur de consigne Δc, par exemple nulle.

La canalisation peut être une canalisation d'un système de protection et de lutte contre les incendies, en particulier d'un système alimentant au moins un asperseur, une canalisation d'une installation de traitement d'eaux usées ou d'eau de piscine ou une conduite d'un pulvérisateur agricole. L'invention concerne aussi un tel système de protection et de lutte contre les incendies.

Dans un mode de réalisation, le dispositif selon l'invention ou l'ensemble selon l'invention présente un encombrement et un poids autorisant son embarquement à bord d'un véhicule automobile, aérien ou flottant, par exemple une voiture ou un camion, ou est transportable par une personne, par exemple sur le dos ou à la main. Notamment pour les cas où le dispositif est destiné à être embarqué ou à être porté par une personne, le réservoir d'additif peut présenter une capacité inférieure à 50 litres, voire inférieure à 20 litres. La source de liquide peut être embarquée ou être constituée par un réseau d'alimentation, par exemple le réseau d'eau public.

L'invention concerne encore un procédé de régulation de la concentration d'un additif dans un liquide circulant dans une canalisation avec un débit variable dans le temps, ce procédé comportant une injection, en un point d'injection sur ladite canalisation, dudit additif avec un débit ajusté par régulation de la pression de consigne d'un détendeur en fonction de la différence de pression Δ entre une pression de référence, et une pression de pilotage, la pression de référence étant soit mesurée dans le conduit d'additif en amont du détendeur, soit mesurée dans le conduit d'additif en aval du détendeur et en amont d'un point de connexion du conduit d'additif à ladite canalisation, la pression de pilotage étant mesurée, dans ladite canalisation, en amont dudit point de connexion.

Ce procédé est de préférence mis en oeuvre au moyen d'un dispositif selon l'invention. L'invention concerne enfin un procédé de rénovation d'une unité de stockage et de dosage destinée à l'injection d'un additif dans une canalisation traversée par un liquide, l'unité comportant :
- un réservoir dont une entrée peut être mise en communication de fluide avec ladite canalisation,
- une poche souple destinée à contenir dudit additif, disposée à l'intérieur du réservoir de manière à subir une pression exercée par dudit liquide lorsque ladite entrée du réservoir communique avec ladite canalisation, et dont une sortie peut être mise en communication de fluide avec ladite canalisation par l'intermédiaire d'un conduit d'additif, et de préférence par l'intermédiaire d'un proportionneur inséré dans ladite canalisation.

Selon l'invention, ce procédé comporte les étapes suivantes :
a) désolidarisation et extraction de la poche hors du réservoir,
b) connexion du réservoir, de préférence en partie supérieure du réservoir, à une source de fluide de pressurisation, de préférence par l'intermédiaire d'une vanne d'isolement,
c) installation d'un détendeur sur le conduit d'additif et d'un régulateur de pression différentielle agencé pour commander la pression de consigne dudit détendeur, de manière à constituer un dispositif selon l'invention.

Avantageusement, ce procédé permet de réutiliser une partie des pièces et des connexions d'un dispositif de dosage et d'injection selon la technique antérieure, notamment du type de celui décrit en introduction.

### Définitions

Par « comportant un « ou « comprenant un », il y a lieu de comprendre « comportant au moins un », sauf indication contraire.

### Brève description des figures

D'autres caractéristiques et avantages de l'invention apparaîtront à la lecture de la description détaillée qui va suivre et à l'examen du dessin annexé dans lequel :
- la figure 1 est une représentation schématique d'un réseau d'asperseurs conventionnel,
- la figure 2 représente une unité de stockage et de dosage selon la technique antérieure,
- la figure 3 représente schématiquement, en coupe transversale, un proportionneur pouvant être utilisé dans un dispositif de stockage et de dosage selon l'invention, et
- la figure 4 représente schématiquement un dispositif de stockage et de dosage selon l'invention.

Dans la description qui va suivre, des références identiques sont utilisées pour désigner des organes identiques ou analogues.

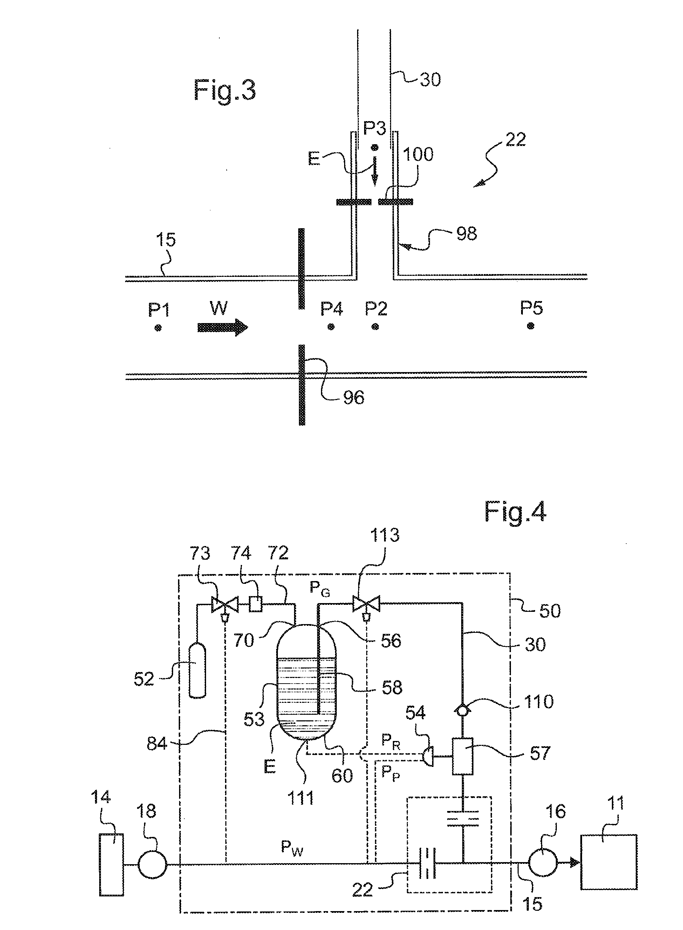

Sur la figure 4, les conduits représentés en pointillés servent à la commande des organes auxquels ils sont connectés.

### Description détaillée

Les figures 1 et 2 ayant été décrites en introduction, on se reporte aux figure 3 et 4. La figure 4 représente un dispositif de stockage et de dosage 50 selon l'invention destiné à alimenter en eau chargée en additif un ensemble d'asperseurs. Comme les unités de stockage et de dosage selon la technique antérieure, le dispositif de stockage et de dosage 50 selon l'invention est inséré dans une canalisation d'eau 15 connectée en amont, par l'intermédiaire d'une pompe 18, à une source de liquide 14, par exemple à un réservoir d'eau, et en aval à un ensemble 11 d'asperseurs, par l'intermédiaire d'un poste de contrôle 16.

Le dispositif 50 comporte une source de fluide de pressurisation 52, un réservoir 53 contenant de l'additif E, un régulateur 54 de pression différentielle et, au point d'injection de l'additif dans la canalisation, un proportionneur 22.

### Réservoir

Le réservoir 53 peut être identique ou similaire au réservoir 24 des unités de stockage et de dosage selon la technique antérieure (figure 2). A la différence de ce dernier, il ne comporte cependant pas de poche souple. De préférence, il présente une capacité comprise entre 200 et 12 000 litres, notamment lorsqu'il est destiné à être utilisé pour assurer la protection d'un bâtiment ou, plus généralement, dans une application à un réseau d'asperseurs.

L'additif contenu dans le réservoir peut être notamment choisi dans le groupe formé par un émulseur, un produit de traitement d'eaux usées, un produit de traitement d'eau de piscine, et un produit phytosanitaire.

Dans un mode de réalisation, le dispositif de stockage et de dosage selon l'invention n'est pas pourvu de moyen permettant le rechargement en additif du réservoir en cas d'incendie. Autrement dit, le volume d'additif disponible en cas d'incendie est limité par la capacité du réservoir.

### Pressurisation du réservoir

Le réservoir 53 est connecté par une entrée de fluide de pressurisation 70, à la source de fluide de pressurisation 52 par l'intermédiaire d'un conduit d'alimentation 72 pourvu d'une vanne d'isolement 73 et d'un détendeur de pressurisation 74.

La nature du fluide de pressurisation n'est pas limitative. Le fluide de pressurisation peut être un fluide gazeux ou non gazeux, de préférence non miscible avec l'additif. Avantageusement, la pressurisation du réservoir avec un fluide non gazeux, c'est-à-dire incompressible, ne conduit pas à une augmentation sensible de l'énergie interne du dispositif selon l'invention. L'utilisation de fluides de pressurisation non compressibles permet également, avantageusement, de limiter les contrôles techniques réglementaires, et en particulier, d'éviter les tests d'épreuve auxquels sont soumis les récipients pressurisés avec un gaz. Si l'additif est aqueux, le fluide de pressurisation peut avantageusement être hydrophobe. De la silicone ou une solution fluorée sont, par exemple, envisageables.

Le fluide de pressurisation peut être du gaz carbonique, de l'azote ou de l'air comprimé. De préférence, le gaz est choisi pour ne pas être soluble dans l'eau. L'azote est le gaz préféré entre tous.

La source de fluide de pressurisation peut, par exemple, être choisie parmi un réseau de gaz comprimé, une bouteille sous pression ou un compresseur.

Le volume et la pression dans la source de fluide de pressurisation sont de préférence déterminés de manière à autoriser le vidage complet du réservoir dans des conditions assurant, à tout instant, une injection d'additif adaptée.

La vanne d'isolement 73 permet sélectivement de couper ou d'établir la communication entre l'entrée de fluide de pressurisation du réservoir et la source de fluide de pressurisation. De préférence, la vanne d'isolement est commandée, par exemple en fonction d'un débit ou d'une pression, pour s'ouvrir en cas de détection d'un incendie par un poste de contrôle, en particulier en cas de circulation de liquide dans la canalisation ou en cas de variation d'une pression du liquide dans cette canalisation. Dans une application à un réseau d'asperseurs, la vanne d'isolement peut en particulier être commandée de manière à s'ouvrir en cas de détection d'une dépression ou d'une circulation d'eau dans le réseau correspondant au déclenchement d'un asperseur. La vanne d'isolement peut être pilotée par un asservissement électronique ou pyrotechnique.

La vanne d'isolement peut être également à ouverture manuelle.

De préférence, la vanne d'isolement est commandée par la pression d'eau P_{w} dans la canalisation 15. A cet effet, elle présente une entrée connectée, par l'intermédiaire d'un conduit de commande 84, à la canalisation d'eau 15. De préférence, elle s'ouvre automatiquement en cas de chute de pression dans la canalisation 15 ou en cas de circulation d'eau dans cette dernière. De préférence encore, elle est conformée pour se refermer automatiquement lorsqu'aucune de ces deux conditions n'est remplie. Avantageusement, une fuite en aval de la vanne d'isolement ne conduit donc pas à une vidange de la source de fluide de pressurisation.

Le détendeur de pressurisation 74 est adapté de manière à assurer, dans le réservoir, une pression de pressurisation constante, quelle que soit la pression dans la source de fluide de pressurisation ou le niveau de remplissage du réservoir. De préférence la pression de pressurisation est supérieure à 6 bar, supérieure à 8 bar, supérieure à 9 bar, et/ou inférieure à 20 bar, inférieure à 16 bar, inférieure à 14 bar. Une pression de pressurisation d'environ 12 bar est bien adaptée.

### Détendeur et régulateur

Une sortie d'additif 56 du réservoir 53 est connectée au proportionneur 22 par l'intermédiaire d'un conduit d'additif 30 dans lequel est inséré un détendeur 57. Le conduit d'additif 30 se prolonge dans le réservoir 53 par un tube plongeur 58 s'étendant sensiblement jusqu'au fond 60 du réservoir de manière à pouvoir extraire l'additif E contenu dans la partie inférieure du réservoir 53.

De préférence, le dispositif selon l'invention comporte encore un clapet anti-retour 110 empêchant un retour de l'eau circulant dans la canalisation 15 vers le réservoir 53 d'additif.

Le détendeur 57 est un détendeur conventionnel, apte à modifier une ouverture de passage de l'additif dans le conduit d'additif 30 de manière à faire tendre la pression de l'additif immédiatement en aval du détendeur vers une pression de consigne. En régime stabilisé, le détendeur assure donc un maintien, à la pression de consigne, de la pression de l'additif immédiatement en aval du détendeur 57.

La pression de consigne est fournie au détendeur 57 et modifiée par le régulateur 54.

Le régulateur 54 est configuré de manière à asservir la pression de consigne du détendeur 57 en fonction de la différence Δ entre la pression de pilotage Pₚ, mesurée dans la canalisation et fournie à une entrée de pilotage du régulateur, et la pression de référence P_{R}, mesurée dans le conduit d'additif et fournie à une entrée de référence du régulateur.

La pression de référence peut être sensiblement égale à la pression de pressurisation du réservoir, par exemple d'environ 12 bar. Elle est de préférence mesurée au fond du réservoir, via une prise de mesure 111, comme représenté, ou, en variante simplifiée, mesurée sur le conduit d'additif, en amont du détendeur 57, de préférence à proximité immédiate de ce dernier. De préférence encore, la pression de référence est mesurée en aval du détendeur 57 et en amont du diaphragme « additif » du proportionneur (point P3 sur la figure 3).

La pression de pilotage Pp doit correspondre sensiblement à la pression P_{W} de l'eau dans la canalisation 15. Elle est mesurée sur la canalisation 15 en amont du point de connexion du conduit d'additif sur la canalisation 15, ou «point d'injection », et, le cas échéant, en amont d'un proportionneur, de préférence encore à moins de 1 mètre, moins de 0,5 mètre du diaphragme « eau » du proportionneur (point P1 sur la figure 3 correspondant au mode de réalisation préféré).

Ainsi, de préférence, le régulateur agit sur le détendeur en boucle fermée, de manière à faire tendre la pression de référence mesurée dans le conduit d'additif 30 de préférence entre le diaphragme « additif» 100 du proportionneur et le détendeur 57 (point P3 sur la figure 3) vers la pression de pilotage, en particulier mesurée en P1.

Les pressions servant à modifier l'action du régulateur sur le détendeur 57 peuvent agir, classiquement, directement sur le régulateur, des entrées de ce dernier étant par exemple connectées, par différents conduits, au réservoir 53 et à la canalisation d'eau 15 ou sur le conduit d'additif 30, en aval du détendeur. Ces pressions peuvent être également mesurées localement par des capteurs et transmises, de préférence électriquement, au régulateur.

De préférence, le régulateur 54 fonctionne sans apport extérieur d'énergie.

De préférence encore, le régulateur est un régulateur mécanique, ne faisant intervenir aucun organe électrique ou électronique. La fiabilité du dispositif en est encore améliorée. L'utilisation d'un régulateur comportant un micro contrôleur est cependant également envisagée.

### Proportionneur

Le proportionneur est destiné à l'injection, dans la canalisation 15, d'additif E provenant du réservoir 53.

Le proportionneur 22 peut notamment être automatique, c'est-à-dire purement mécanique. Le proportionneur peut en particulier comporter des moyens pour accélérer les flux d'additif et de liquide le traversant. Par exemple, il peut être un proportionneur classique à effet venturi et comporter des premier et deuxième diaphragmes réduisant les sections de passage dudit liquide et dudit additif, respectivement.

Le proportionneur 22 peut en particulier être conformé pour assurer un débit d'injection d'additif sensiblement proportionnel à la racine carré de la pression en aval du détendeur. La constante de proportionnalité dépend notamment du diamètre de la canalisation, des pertes de charge, etc.

La figure 3 représente, en coupe longitudinale schématique, un exemple de proportionneur 22. Ce dispositif comporte un diaphragme « eau » 96 obturant partiellement la canalisation 15 en s'opposant à la circulation de l'eau (flèche W). En aval de ce diaphragme, le proportionneur comporte un piquage 98 destiné à l'injection d'additif (flèche E) dans le flux d'eau. Ce piquage comporte lui-même un diaphragme « additif » 100 et est connecté à la sortie du détendeur. Les diaphragmes « eau » et « additif » sont destinés à accélérer les courants d'eau et d'additif, de manière à ce que la pression en aval de ces diaphragmes (point P2) soit inférieure aux pressions d'eau (point P1) et d'additif (point P3) en amont des diaphragmes « eau » et « additif », respectivement. En théorie, un tel dispositif permet d'obtenir une concentration d'additif dans le courant d'eau sensiblement constante en aval du point d'injection (matérialisé par la connexion du piquage 98) pourvu que la pression de l'additif P_{E} au point P3 reste sensiblement identique à la pression d'eau P_{W} au point P1. Une calibration de l'ouverture des diaphragmes, et notamment du diaphragme « additif », permet d'adapter la concentration de l'additif dans l'eau de manière à obtenir, dans une application à un réseau d'asperseurs, une concentration généralement comprise entre 3 et 6 % en volume, pourvu que le débit d'eau évolue dans une plage limitée.

Dans un mode de réalisation, le proportionneur est conformé de manière à ce que, lorsque les pressions dudit liquide et dudit additif en amont dudit proportionneur sont sensiblement égales, le débit d'additif injecté soit sensiblement proportionnel au débit de liquide dans ladite canalisation.

### Fonctionnement

Le fonctionnement du dispositif de stockage et de dosage qui vient d'être décrit est le suivant :
En dehors des phases d'injection de l'additif, c'est-à-dire en l'absence d'incendie, la vanne d'isolement 73 est de préférence fermée de sorte que le régulateur et le réservoir ne sont pas maintenus sous pression, ce qui avantageusement limite les risques de fuite et les coûts de maintenance. Une vanne 113 peut être également prévue, sur le conduit d'additif, pour sélectivement isoler le réservoir du détendeur. De préférence, cette vanne est commandée comme la vanne d'isolement 73 et s'ouvre automatiquement en cas de détection d'un incendie.

En cas d'incendie, la température à proximité des asperseurs 12 augmente jusqu'à faire fondre un ou plusieurs éléments fusibles. Il en résulte une dépressurisation en aval du poste de contrôle 16. Ce dernier commande alors une mise en communication des asperseurs 12 avec la source d'eau 14 et la mise en marche de la pompe 18. La canalisation 15 est alors mise sous pression, ce qui provoque l'ouverture de la vanne d'isolement 73 et la pressurisation de réservoir, à la pression P_{G}, par la source de pressurisation.

La pression P_{G} pousse l'additif E dans le tube plongeur 58, le conduit d'additif 30, le clapet anti-retour 110, le détendeur 57, le proportionneur 22, puis la canalisation 15.

Dans le mode de réalisation représenté, la pression de référence P_{R} est sensiblement égale à la somme de la pression de pressurisation P_{G} et de la pression hydrostatique exercée par le poids de l'additif, en particulier lorsqu'elle est mesurée au fond du réservoir, réduite par la perte de charge éventuelle entre le réservoir et le régulateur. La pression de référence P_{R} est donc proche de la pression de pressurisation, par exemple de 12 bar.

La pression de pilotage P_{P} est sensiblement égale à la pression P_{W} dans la canalisation 15 en amont du proportionneur, réduite par la perte de charge éventuelle entre la canalisation 15 et le régulateur. La pression de pilotage P_{P} est donc proche de la pression P_{W} dans la canalisation 15, par exemple de 10 bar.

Le régulateur 54 modifie alors la pression de consigne du détendeur en fonction de la différence Δ entre la pression de référence et la pression de pilotage.

Dans un mode de réalisation, le régulateur 54 modifie la pression de consigne du détendeur de manière que Δ tende vers une valeur de consigne Δc.

Δc est de préférence constant dans le temps. Δc peut être également variable, suivant une loi de commande mise en oeuvre par le régulateur, par exemple de type PID.

Δc peut être modifié en fonction d'une différence entre la pression de pilotage et une pression mesurée dans la canalisation 15 en aval du point d'injection, par exemple au point P5 représenté sur la figure 3, de préférence de manière que cette différence soit supérieure à 0,05 bar, supérieure à 0,1 bar, supérieure à 0,15 bar, voire supérieure à 0,2 bar, et/ou inférieure à 2 bar, ou inférieure à 1,8 bar, ou inférieure à 1,6 bar, ou inférieure à 1,5 bar.

La qualité de la régulation en est améliorée. En particulier cette régulation permet de tenir compte de la dérive de la pression de référence résultant de l'évolution de la pression hydrostatique du fait de la vidange du réservoir (diminution de hauteur « h » entre le niveau de l'additif dans le réservoir et le point de mesure de la pression de référence).

Δc peut être également déterminé en fonction du régulateur utilisé.

Δc peut être également déterminé en fonction des pertes de charge entre le réservoir et le régulateur et entre la canalisation 15 et le régulateur, ce qui permet une adaptation à la géométrie du réseau, aux emplacements de mesure des pressions de pilotage et de référence et à la viscosité de l'additif.

Δc peut être nulle, positive ou négative.

De préférence, la valeur de consigne Δc est supérieure à 0,05 bar et/ou inférieure à 0,5 bar, inférieure à 0,3 bar, voire inférieure à 0,25 bar, une valeur de 0,2 bar étant préférée.

Lorsque la pression P_{W} dans la canalisation 15, et donc la pression de pilotage, évoluent, notamment du fait d'une évolution du nombre d'asperseurs déclenchés, le régulateur 54 modifie instantanément en conséquence, suivant la loi de commande, la pression de consigne du détendeur afin d'assurer une concentration en additif sensiblement constante dans le mélange eau + additif (W + E) pulvérisé par les asperseurs.

Le dispositif selon l'invention permet d'obtenir une concentration en additif dans l'eau sensiblement constante pour un débit variant de 400 à 2 400 l/min, en particulier dans les conditions de fonctionnement d'un dispositif de protection et de lutte contre les incendies mettant en oeuvre un réseau d'asperseurs.

Comme cela apparaît clairement à présent, l'invention fournit une solution fiable et bon marché. Cette solution présente l'avantage de la simplicité. L'absence de poche souple rend également le reconditionnement très simple.

Avantageusement, le dispositif de stockage et de dosage selon l'invention peut être fabriqué par rénovation d'une unité de stockage et de dosage comportant une poche souple selon la technique antérieure. Pour cela, l'opérateur peut exécuter les étapes a) à c) décrites ci-dessus.

Après avoir désolidarisé et retiré la poche du réservoir, il modifie les entrées et les sorties de ce dernier de manière à ce qu'il soit sélectivement en communication de fluide avec une source de fluide de pressurisation par une entrée de fluide de pressurisation 70 ménagée de préférence en partie supérieure du réservoir, avec le détendeur 57 par une sortie 56 le connectant au détendeur 57, via le conduit d'additif et, par une prise de mesure 111, de préférence à proximité du fond du réservoir, avec l'entrée de référence du régulateur (lui fournissant la pression de référence).

L'opérateur connecte ensuite l'entrée de pilotage du régulateur (lui fournissant la pression de pilotage) de manière à y entrer la pression dans la canalisation 15 en amont du proportionneur, en particulier en amont du diaphragme « eau ».

Après l'étape c), le réservoir est rempli, au moins partiellement, avec de l'additif Le régulateur est alors capable de modifier la pression de consigne du détendeur 57 en fonction d'une pression de pilotage correspondant sensiblement à la pression du liquide dans la canalisation.

Le cas échéant, le procédé de rénovation comporte une étape de réglage de la valeur de consigne Δc du régulateur, par exemple en fonction de la nature de l'additif, et notamment de sa viscosité.

Le procédé de rénovation selon l'invention permet ainsi avantageusement de réutiliser le proportionneur de l'unité de stockage et de dosage déjà en place, ainsi que le réservoir qui contenait l'enveloppe souple. Les coûts de fabrication et d'installation en sont sensiblement réduits.

Si le dispositif de stockage et de dosage selon l'invention peut être mis en oeuvre dans le cadre d'un dispositif de protection contre l'incendie, l'additif pouvant notamment être un émulseur, il peut également être utilisé dans d'autres applications, et notamment pour le traitement d'eaux usées ou d'eau de piscine, ou dans des applications agricoles, par exemple pour pulvériser des produits phytosanitaires dilués. L'additif est alors un produit de traitement d'eaux usées ou d'eau de piscine ou un produit phytosanitaire.

En outre, le tube plongeur est optionnel. Par exemple, la sortie d'additif 56 peut être disposée au fond du réservoir. De préférence, cette sortie est alors équipée d'un clapet, par exemple à bille, permettant d'obturer le conduit d'additif lorsque le réservoir est vide.

Le clapet peut par exemple être commandé au moyen d'un flotteur flottant dans le réservoir en surface de l'additif.

## Revendications

1. Dispositif de stockage et de dosage destiné à l'injection d'un additif dans une canalisation (15) traversée par un liquide dont le débit est variable, comportant :
- un réservoir (53) destiné à contenir dudit additif et à être pressurisé à une pression de pressurisation par un fluide de pressurisation, et
- un conduit d'additif (30) connecté d'une part audit réservoir et d'autre part à ladite canalisation,
le dispositif étant **caractérisé en ce qu'**il comporte :
- un détendeur (57) inséré dans ledit conduit d'additif ;
- un régulateur de pression différentielle conformé pour modifier la pression de consigne dudit détendeur en fonction de la différence Δ entre une pression de référence et une pression de pilotage, la pression de référence étant soit mesurée dans le conduit d'additif en amont du détendeur, soit mesurée dans le conduit d'additif en aval du détendeur et en amont d'un point de connexion du conduit d'additif à ladite canalisation, la pression de pilotage étant mesurée, dans ladite canalisation, en amont dudit point de connexion.

2. Dispositif selon la revendication précédente, dans lequel le régulateur est configuré de manière à régler la pression de consigne du détendeur de manière à faire tendre la différence Δ vers une valeur de consigne Δc constante.

3. Dispositif selon l'une quelconque des revendications précédentes, comportant une source de fluide de pressurisation connectée au réservoir (53) par l'intermédiaire d'un détendeur de pressurisation (74) de manière à pouvoir pressuriser ledit réservoir à une pression sensiblement constante.

4. Dispositif selon l'une quelconque des revendications précédentes, le régulateur étant un régulateur mécanique ne faisant intervenir aucun organe électrique ou électronique.

5. Dispositif selon l'une quelconque des revendications précédentes, comportant un proportionneur (22) comportant des premier (96) et deuxième (100) diaphragmes réduisant des sections de passage dudit liquide et dudit additif, respectivement, la pression de pilotage étant mesurée en amont dudit premier diaphragme (96).

6. Dispositif selon l'une quelconque des revendications précédentes, comportant une source de fluide de pressurisation connectée au réservoir par l'intermédiaire d'une vanne d'isolement (82) permettant sélectivement de couper ou d'établir la communication entre ledit réservoir et la source de fluide de pressurisation.

7. Dispositif selon l'une quelconque des revendications précédentes, le réservoir (53) contenant un additif choisi dans le groupe formé par un émulseur, un produit de traitement d'eaux usées, un produit de traitement d'eau de piscine et un produit phytosanitaire.

8. Dispositif selon l'une quelconque des revendications précédentes, conformé de manière à pouvoir être embarqué à bord d'un véhicule, automobile, aérien ou flottant, ou à être transportable par une personne.

9. Dispositif selon l'une quelconque des revendications précédentes, la source de fluide de pressurisation étant choisie parmi un réseau de gaz comprimé, une bouteille sous pression, un compresseur.

10. Ensemble comportant un dispositif selon l'une quelconque des revendications précédentes, ladite canalisation et un proportionneur (22) d'injection de l'additif dans la canalisation, ensemble dans lequel
- la pression de pilotage est mesurée dans la canalisation en amont du proportionneur, et/ou
- la pression de référence est mesurée dans le conduit d'additif (30) immédiatement en amont du détendeur, ou dans le réservoir, ou en aval du détendeur (57) et en amont dudit proportionneur.

11. Ensemble selon la revendication précédente, la canalisation étant une canalisation d'un système de protection et de lutte contre les incendies comportant au moins un asperseur (12).

12. Ensemble selon l'une quelconque des deux revendications immédiatement précédentes, la pression de référence étant mesurée en aval du détendeur et en amont dudit proportionneur.

13. Ensemble selon la revendication immédiatement précédente, le régulateur étant conformé pour agir sur le détendeur de manière à faire tendre la pression de référence vers la pression de pilotage.

14. Procédé de rénovation d'une unité de stockage et de dosage destinée à l'injection d'un additif dans une canalisation (15) traversée par un liquide, l'unité comportant
- un réservoir (24) dont une entrée peut être mise en communication de fluide avec ladite canalisation,
- une poche souple (26) destinée à contenir dudit additif, disposée à l'intérieur du réservoir de manière à subir une pression exercée par dudit liquide lorsque ladite entrée du réservoir communique avec ladite canalisation, et dont une sortie peut être mise en communication de fluide avec ladite canalisation, en particulier par l'intermédiaire d'un proportionneur (22) inséré dans ladite canalisation,
le procédé comportant les étapes suivantes :
a) désolidarisation et extraction de la poche hors du réservoir,
b) connexion de l'entrée de fluide de pressurisation du réservoir à une source de fluide de pressurisation,
c) installation d'un détendeur sur le conduit d'additif et d'un régulateur de commande dudit détendeur, de manière à constituer un dispositif selon l'une quelconque des revendications 1 à 9.

## Patentansprüche

1. Vorrichtung zur Speicherung und Dosierung, die dazu bestimmt ist, ein Additiv in ein Rohr (15) zu injizieren, das mit variablem Durchsatz von einer Flüssigkeit durchströmt wird, umfassend:
- einen Behälter (53), der dazu bestimmt ist, das Additiv aufzunehmen und mit Hilfe eines Ausgleichsdruckfluids unter einem Ausgleichsdruck gehalten zu werden, und
- eine Additivleitung (30), die einerseits an den Behälter und andererseits an das Rohr angeschlossen ist,
wobei die Vorrichtung **dadurch gekennzeichnet** ist, dass sie aufweist:
- einen Druckminderer (57), der in die Additivleitung eingesetzt ist,
- einen differentiellen Druckregler, der dazu ausgebildet ist, den Solldruck des Druckminderers in Abhängigkeit von der Differenz Δ zwischen einem Referenzdruck und einem Steuerdruck zu modifizieren, wobei der Referenzdruck in der Additivleitung stromaufwärts des Druckminderers gemessen wird oder in der Additivleitung stromabwärts des Druckminderers und stromaufwärts des Verbindungspunktes der Additivleitung mit dem Rohr gemessen wird und der Steuerdruck in dem Rohr stromaufwärts des Verbindungspunktes gemessen wird.

2. Vorrichtung nach dem vorstehenden Anspruch, bei der der Regler so konfiguriert ist, dass er den Solldruck des Druckminderers so regelt, dass die Differenz Δ sich einem konstanten Sollwert Δc nähert.

3. Vorrichtung nach einem der vorstehenden Ansprüche, mit einer Druckfluidquelle, die in der Weise über einen Ausgleichsdruckminderer (74) mit dem Behälter (53) verbunden ist, dass sie den Behälter auf einem im wesentlichen konstanten Druck halten kann.

4. Vorrichtung nach einem der vorstehenden Ansprüche, bei der der Regler ein mechanischer Regler ist, der ohne jegliche Mitwirkung von elektrischen oder elektronischen Organen arbeitet.

5. Vorrichtung nach einem der vorstehenden Ansprüche, mit einem Proportionierer (22), der erste (96) und zweite (100) Diaphragma aufweist, die Durchtrittsquerschnitte für die Flüssigkeit bzw. für das Additiv einengen, wobei der Steuerdruck stromaufwärts der ersten Diaphragma (96) gemessen wird.

6. Vorrichtung nach einem der vorstehenden Ansprüche, mit einer Ausgleichsdruckfluidquelle, die mit dem Behälter über einen Sperrschieber (82) verbunden ist, der es erlaubt, die Verbindung zwischen dem Behälter und der Ausgleichsdruckfluidquelle je nach Wahl herzustellen oder zu trennen.

7. Vorrichtung nach einem der vorstehenden Ansprüche, bei der der Behälter (53) ein Additiv enthält, das ausgewählt ist aus der Gruppe bestehend aus einem Emulgator, einem Mittel zur Behandlung von Abwasser, einem Mittel zur Behandlung von Schwimmbadwasser, und einem Pflanzenschutzmittel.

8. Vorrichtung nach einem der vorstehenden Ansprüche, so ausgebildet, dass sie an Bord eines Land-, Luft- oder Wasserfahrzeugs oder von einer Person mitgeführt werden kann.

9. Vorrichtung nach einem der vorstehenden Ansprüche, bei der die Ausgleichsdruckfluidquelle ein Druckgasnetz, eine Druckflasche oder ein Kompressor ist.

10. Baugruppe mit einer Vorrichtung nach einem der vorstehenden Ansprüche, dem genannten Rohr und einem Proportionierer (22) zur Injektion des Additivs in das Rohr, bei welcher Baugruppe
- der Steuerdruck in dem Rohr stromaufwärts des Proportionierers gemessen wird und/oder
- der Referenzdruck in der Additivleitung (30) unmittelbar stromaufwärts des Druckminderers oder in dem Behälter oder stromabwärts des Druckminderers (57) und stromaufwärts des Proportionierers gemessen wird.

11. Baugruppe nach dem vorstehenden Anspruch, bei der das Rohr ein Rohr eines Brandschutz- oder Brandbekämpfungssystems ist, das wenigstens einen Sprinkler (12) aufweist.

12. Baugruppe nach einen der beiden unmittelbar vorangehenden Ansprüche, bei der der Referenzdruck stromabwärts des Druckminderers und stromaufwärts des Proportionierers gemessen wird.

13. Baugruppe nach dem unmittelbar vorangehenden Anspruch, bei der der Regler so ausgebildet ist, dass er so auf den Druckminderer wirkt, dass der Referenzdruck dem Steuerdruck angenähert wird.

14. Verfahren zur Nachrüstung einer Speicher- und Dosiereinheit, die bestimmt ist zur Injektion eines Additivs in ein Rohr (15), das von einer Flüssigkeit durchströmt wird, welche Einheit aufweist:
- einen Behälter (24) mit einem Einlass, der mit dem genannten Rohr in Fluidverbindung gebracht werden kann,
- einer weichen Tasche (26), die dazu bestimmt ist, das Additiv aufzunehmen, und die so im Inneren des Behälters angeordnet ist, dass sie dem von der Flüssigkeit ausgeübten Druck ausgesetzt ist, wenn der genannte Einlass des Behälters mit dem Rohr verbunden ist, und die einen Auslass hat, der mit dem Rohr in Fluidverbindung gebracht werden kann, insbesondere über einen in das Rohr eingesetzten Proportionierer (22), welches Verfahren die folgenden Schritte umfasst:
a) Lösen und Entnehmen der Tasche aus dem Behälter,
b) Verbinden des Ausgleichsdruckfluideinlasses des Behälters mit einer Druckquelle,
c) Einbau eines Druckminderers in die Additivleitung und eines Steuerreglers für den Druckminderer, derart, dass eine Vorrichtung nach einem der Ansprüche 1 bis 9 gebildet wird.

## Claims

1. Storage and metering device intended for injecting an additive into a pipe (15) through which a liquid flows with variable flow rate, comprising:
- a reservoir (53) intended to contain said additive and be pressurised to a pressurisation pressure by a pressurisation fluid, and
- an additive conduit (30) connected firstly to said reservoir and secondly to said pipe,
the device being **characterised in that** it comprises:
- a relief valve (57) inserted in said additive conduit;
- a differential pressure regulator adapted to modify the set point pressure of said relief valve as a function of the difference Δ between a reference pressure and a control pressure, the reference pressure being measured either in the additive conduit upstream of the relief valve or in the additive conduit downstream of the relief valve and upstream of a connection point of the additive conduit to said pipe, the control pressure being measured in said pipe upstream of said connection point.

2. Device according to the preceding claims, wherein the regulator is configured to regulate the set point pressure of the relief valve so as to shift the difference Δ towards a constant set point value Δc.

3. Device according to any of the preceding claims, comprising a pressurisation fluid source connected to the reservoir (53) via a pressure relief valve (74) so as to be able to pressurise said reservoir to a substantially constant pressure.

4. Device according to any of the preceding claims, the regulator being a mechanical regulator using no electrical or electronic element.

5. Device according to any of the preceding claims, comprising a proportioning valve (22) comprising first (96) and second (100) diaphragms reducing the passage sections of said liquid and said additive respectively, the control pressure being monitored upstream of said first diaphragm (96).

6. Device according to any of the preceding claims, comprising a pressurisation fluid source connected to the reservoir via an isolating valve (82) allowing selective shutoff or creation of communication between said reservoir and the pressurisation fluid source.

7. Device according to any of the preceding claims, the reservoir (53) containing an additive selected from the group formed by an emulsifier, a waste water treatment product, a swimming pool water treatment product, and a phytosanitary product.

8. Device according to any of the preceding claims, configured to be able to be mounted on-board a motor vehicle, aircraft or floating vessel, or to be transportable by a person.

9. Device according to any of the preceding claims, the pressurisation fluid source being selected from a compressed gas network, a pressurised cylinder, a compressor.

10. Assembly comprising a device according to any of the preceding claims, said pipe and a proportioning valve (22) for injecting additive into the pipe, in which assembly:
- the control pressure is measured in the pipe upstream of the proportioning valve, and/or
- the reference pressure is measured in the additive conduit (30) immediately upstream of the relief valve, or in the reservoir, or downstream of the relief valve (57) and upstream of said proportioning valve.

11. Assembly according to the preceding claims, the pipe being a pipe of a fire-protection and fire-fighting system comprising at least one sprinkler unit (12).

12. Assembly according to any of the two immediately preceding claims, the reference pressure being measured downstream of the relief valve and upstream of said proportioning valve.

13. Assembly according to the immediately preceding claim, the regulator being configured to act on the relief valve so as to shift the reference pressure towards the control pressure.

14. Method for renovating a storage and metering unit intended for injection of an additive into a pipe (15) through which a liquid flows, the unit comprising:
- a reservoir (25), an inlet of which may be brought into fluid communication with said pipe,
- a flexible pocket (26) intended to contain said additive, arranged inside the reservoir so as to be exposed to a pressure exerted by said liquid when said reservoir inlet communicates with said pipe, and an outlet of which may be brought into fluid communication with said pipe, in particular via a proportioning valve (22) inserted in said pipe,
the method comprising the following steps:
a) separation and extraction of the pocket from the reservoir,
b) connection of the pressurisation fluid inlet of the reservoir to a pressurisation fluid source,
c) installation of a relief valve on the additive conduit and a control regulator for said relief valve so as to constitute a device according to any of claims 1 to 9.
